# EUROPÄISCHE PATENTANMELDUNG

(11) **EP 1 469 278 A1**
(43) Veröffentlichungstag der Anmeldung: **20.10.2004**
(21) Anmeldenummer: 04005335.7
(22) Anmeldetag: 05.03.2004
(51) Int. Cl.: G01B 11/10, B65G 43/02

(54) **Vorrichtung zum Erfassen des Verschleisszustandes von Rädern oder Rollen**

(30) Priorität: 17.04.2003 DE 10317946
(71) Anmelder: SIEMENS AKTIENGESELLSCHAFT, 80333 München (DE)
(72) Erfinder: Hochhaus, Frank, 60316 Frankfurt (DE); Kubik, Jaro, 64832 Babenhausen (DE); König, Frank, 75014 Paris (FR)

(57) **Zusammenfassung**

Die Erfindung betrifft eine Vorrichtung und ein Verfahren zum automatischen Erfassen des Verschleißzustandes von ortsbeweglichen Rädern oder Rollen (1) in fördertechnischen Anlagen, z. B. Gepäckförderanlagen. Sie löst die Aufgabe, den Verschleißzustandes auf eine einfache und sichere Weise automatisch messtechnisch zu erfassen, wenn die zu überprüfende Rolle die Anlage durchläuft, durch eine im Förderweg der Anlage stationär angeordnete Messstation (2,3), in der Durchmesserabweichungen des Rades oder der Rolle (1) von einem vorgegebenen Solldurchmesser berührungslos erfassbar und signalisierbar sind.

## Beschreibung

Die Erfindung betrifft eine Vorrichtung zum automatischen Erfassen des Verschleißzustandes von ortsbeweglichen Rädern oder Rollen in fördertechnischen Anlagen, insbesondere von Leit- oder Führungsrollen an Behältern von Gepäckförderanlagen.

In einer Vielzahl technischer Anlagen werden Rollen oder Räder zum Transportieren oder Führen von Anlagenteilen eingesetzt, wobei die Rollen oder Räder naturgemäß einem Verschleiß unterliegen. Wenn der Verschleißzustand visuell leicht feststellbar ist, können die verschlissenen Teile rechtzeitig ausgetauscht werden, bevor Schäden an der Anlage entstehen. Häufig jedoch sind die Räder oder Rollen derart in die Anlage integriert, dass sie von außen nur schlecht oder gar nicht sichtbar sind. Auftretender Verschleiß wird dann häufig erst bemerkt, wenn bereits Schäden an der Anlage eingetreten sind. Will man das verhindern, müssen die entsprechenden Verschleißteile regelmäßig kontrolliert und ggf. ausgetauscht werden, was häufig erheblichen Montageaufwand und Stillstand der Anlage bedeutet. Es wäre deshalb von Vorteil, den Verschleißzustand von ortsbeweglichen Rädern oder Rollen automatisch bei deren Durchlauf oder Umlauf in der Anlage zu erfassen, um verschlissene Rollen oder Räder gezielt zu erkennen und im richtigen Zeitpunkt auszuwechseln.

Aufgabe der vorliegenden Erfindung ist es, eine Vorrichtung und ein Arbeitsverfahren zum automatischen Erfassen des Verschleißzustandes von ortsbeweglichen Rädern oder Rollen in fördertechnischen Anlagen zu schaffen, mit der bzw. mit dem auf eine einfache und sichere Weise jede die Anlage

Zur Lösung der Aufgabe wird erfindungsgemäß eine Vorrichtung vorgeschlagen, die gekennzeichnet ist durch eine von dem Rad oder der Rolle durchlaufene, im Förderweg der Anlage stationär angeordnete Messstation, in der Durchmesserabweichungen des Rades oder der Rolle von einem vorgegebenen Solldurchmesser berührungslos erfassbar und signalisierbar sind.

Erfindungsgemäß ist der sich verändernde Durchmesser des Rades oder der Rolle ein Maß für deren Verschleißzustand. Jede Rolle oder jedes Rad hat im unverbrauchten Zustand einen vorgegebenen Solldurchmesser, der sich im Laufe des Gebrauchs verändert, d.h. er wird kleiner. Diese Verkleinerung des Durchmessers ist bis zu einem bestimmten Maß tolerierbar, sinkt der Durchmesser des Rades oder der Rolle unter einen bestimmten Wert ab, und sind Beschädigungen an der Anlage zu erwarten, muss das Bauteil ausgewechselt werden. Durch einfaches berührungsloses Messen des Durchmessers während des Durchlaufs der Rolle durch die Messstation kann dieser Verschleißzustand erkannt und der Zeitpunkt für das Auswechseln des Rades oder der Rolle signalisiert werden.

Nach einem besonderen Merkmal der Erfindung erfolgt die Erfassung der Durchmesserabweichung des Rades oder der Rolle in der Messstation optisch. Die optische Messmethode gestattet in unkomplizierter Weise das Messen während des Durchlaufs. Bekannte mechanische Messungen hingegen lassen sich nur im Ruhezustand des Rades oder der Rolle durchführen.

In einer besonders günstigen Ausgestaltung der Erfindung ist vorgesehen, dass zur Erfassung der Durchmesserabweichungen in der Messstation das Rad oder die Rolle durch zwei voneinander beabstandete parallele Lichtschranken geführt wird, die tangential zum Rad- oder Rollenumfang gerichtet sind und deren Abstand dem kleinsten noch zulässigen Durchmesser des Rades oder der Rolle entspricht.

Die parallelen Lichtschranken, auch Laserstrahlen können Verwendung finden, sind der Kern der optischen Verschleißmessung, sie ermöglichen aufgrund ihres exakt festzulegenden parallelen Abstandes den Verschleißzustand eines durchlaufenden Rades oder einer Rolle genau zu ermitteln. Ist das Rad oder die Rolle in einem "Gut-Zustand", ist also der Durchmesser der Rolle noch nicht unter einen Minimalwert abgesunken, so werden beim Durchlauf der Rolle gleichzeitig für einen kurzen Zeitpunkt beide Lichtschranken unterbrochen. Ist dies nicht der Fall, so ist die durchlaufende Rolle kleiner als der Abstand der Lichtschranken, was auf einen zu hohen Verschleißzustand hindeutet und ein Auswechseln des Rades oder der Rolle erforderlich macht.

Konstruktiv einfach ist es, wenn zur Verbesserung der Messgenauigkeit in der Messstation ein Schlitzblech vorgesehen ist, dessen zwei im Abstand angeordnete Schlitze zur Bildung der Lichtschranken jeweils einen definierten Lichtstrahl auf gegenüberliegende Sensoren leiten. Die gegenüberliegenden Sensoren sind so gestaltet, dass sie die Unterbrechung des Lichtstrahles detektieren oder bei einer Unterbrechung nicht reflektieren. Das vorgeschlagene Schlitzblech lässt sich leicht vorbereiten und an der Anlage installieren, die Schlitze können sehr exakt eingebracht werden und brauchen hinsichtlich ihres Seitenabstandes auf der Anlage nicht mehr justiert werden.

Erfindungsgemäß ist der Messeinrichtung eine Auswerteeinheit zugeordnet, in der das von den Sensoren empfangene Messsignal auswertbar und in ein Signal umwandelbar ist. Diese Auswerteeinheit kann mit allem benötigten Zubehör in einem Gehäuse untergebracht werden. An die Auswerteeinheit werden die Sensoren und eine Stromversorgung angeschlossen. Aus ihr erhält man drei Signale, nämlich die beiden für die Lichtschranken zur Überwachung auf Ausfall und totalen Radbruch sowie ein OK-Signal für eine als "gut" erkannte Rolle.

Um erkennen zu können, dass eine bestimmte Rolle oder ein Rad geprüft werden soll (anwesend ist), ist nach einem weiteren Merkmal der Erfindung ein Initiator auf der Höhe der Messstation vorgesehen, der das nötige "Anwesenheitssignal" an die Messstation leitet.

Wird eine erfindungsgemäße Messstation in einer Anlage eingesetzt, in der eine Vielzahl von Rädern und/oder Rollen zu überprüfen sind, muss die Steuerung erkennen können, welches Rad oder welche Rolle, ggf. beim nächsten Wartungstermin, ausgeschleust werden soll bzw. ausgetauscht werden muss. Zu diesem Zweck ist zur Identifizierung des Rades oder der Rolle stromaufwärts der Messstation eine Lesestelle für eine mit dem Rad oder der Rolle mitgeführte Information vorgesehen. Diese Information kann beispielsweise an einem von der Rolle geführten Behälter angebracht sein und herkömmlich maschinenlesbar sein. Die gelesene Information wird dann dem Rechner zugeleitet und verarbeitet, beispielsweise zu einem Signal zum Ausschleusen eines Behälters mit einer defekten Rolle oder einem defekten Rad.

Das erfindungsgemäße Messverfahren ist dadurch gekennzeichnet, dass eine beim Durchlauf des Rades oder der Rolle durch zwei definiert voneinander beabstandete parallele Lichtschranken kurzzeitige gleichzeitige Unterbrechung beider Lichtschranken als Signal für ein unverschlissenes Rad oder eine unverschlissene Rolle gewertet wird und das Fehlen einer kurzzeitigen gleichzeitigen Unterbrechung beider Lichtschranken beim Durchlaufen des Rades oder der Rolle durch die Lichtschranken als Signal für ein verschlissenes Rad oder eine verschlissene Rolle gewertet wird.

Die vorliegende Erfindung bietet eine überraschend einfache und funktionssichere Lösung zum Erfassen verschlissener Rollen oder Räder an, die vielfältig einsetzbar ist. Die Einrichtung ist weitgehend wartungsfrei und kostengünstig; sie lässt sich auch in bestehenden Anlagen nachrüsten.

Ein Ausführungsbeispiel der Erfindung ist in der Zeichnung dargestellt und wird nachfolgend am Beispiel einer Gepäckförderanlage beschrieben, wie sie an Flughäfen zum Transportieren von Gepäckstücken aufnehmenden Behältern Verwendung findet.

Es zeigt:
- FIG 1: den schematischen Aufbau einer erfindungsgemäßen Vorrichtung in der Draufsicht und
- FIG 2: eine Seitenansicht der Vorrichtung nach FIG 1.

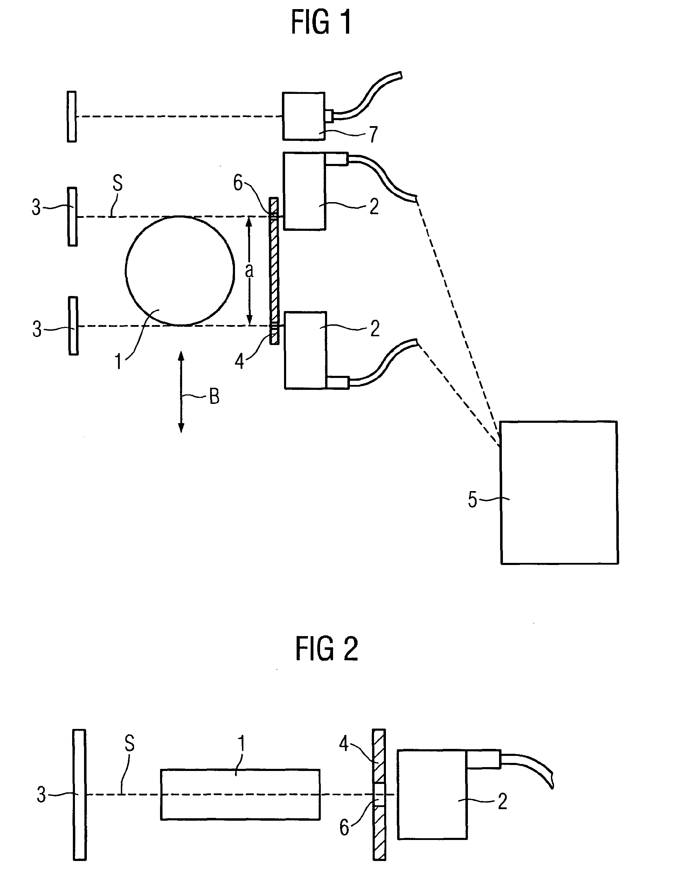

In den Zeichnungsfiguren ist die erfindungsgemäße Vorrichtung zum automatischen Erfassen des Verschleißzustandes ortsbeweglicher Rollen grob schematisch dargestellt, um daran die Funktionsweise der Erfindung zu erläutern. In FIG 1 sind mit 2 zwei Lichtschranken bezeichnet, die jeweils einen Lichtstrahl S auf je einen der auf der gegenüberliegenden Seite jeder Lichtschranke 2 angeordneten Reflektoren 3 richten. Die Lichtstrahlen S sind in exakt definiertem Abstand a ausgerichtet und verlaufen parallel zueinander. Mit 1 ist eine zu vermessende Rolle bezeichnet, die in Bewegungsrichtung b durch die Messstation bewegbar ist, wie der Doppelpfeil anzeigt.

Mit 4 ist ein Schlitzblech bezeichnet, das in genauem Abstand der Lichtstrahlen S mit Durchbrüchen 6 versehen ist, durch die dass Licht mit einer großen Genauigkeit geleitet und reflektiert wird. Die Sensoren, beispielsweise die Reflektoren 3 der Messstation, detektieren die Lichtstrahlen S, ihre Reflektion oder Unterbrechung wird in herkömmlicher Weise in der mit 5 bezeichneten Auswerteeinheit erfasst. Die Auswerteeinheit liefert die drei Signale, nämlich die Funktion der jeweiligen Lichtschranke sowie ein OK-Signal für eine als ""gut" erkannte Rolle, bzw. das Signal für eine als "verschlissen" erkannte Rolle.

In der Seitenansicht der FIG 2 sind gleiche Teile gleich bezeichnet.

### Funktionsweise:

Durchfährt eine Rolle 1 die Messstation, so werden die Lichtschranken nacheinander unterbrochen. Ist der Durchmesser der Rolle groß genug, entspricht er also dem Sollmaß, werden für einen sehr kurzen Moment beide Lichtschranken gleichzeitig unterbrochen. Dies wird über die Sensoren der Auswerteeinheit 5 gemeldet, sie geben den Hinweis darauf, dass die Rolle nicht verschlissen ist. Dabei werden durch den definierten Abstand der Schlitze in dem Schlitzblech (entspricht a) die Lichtstrahlen S so präzise geführt, dass man eine genaue Aussage über den Abnutzungsgrad der Rolle treffen kann.

Ist der Rollendurchmesser kleiner als der Abstand a der Lichtstrahlen S, so erfolgt zu keiner Zeit beim Durchlauf der Rolle eine gleichzeitiges Unterbrechen der Lichtschranken, was in der Auswerteeinheit 5 eine "Fehlermeldung" erzeugt. Es lässt sich dann darauf schließen, dass eine verschlissene Rolle die Messstation durchlaufen hat oder aber gar keine Rolle vorhanden war.

Da die Rolle, beziehungsweise ein Behälter, an dem die Rolle gelagert ist, eine den Behälter identifizierende Lesestelle durchlaufen hat und deshalb bekannt ist, welche der Rollen verschlissen ist, kann der entsprechende Behälter in der Anlage verfolgt werden und zur gegebenen Zeit ausgetauscht werden.

## Patentansprüche

1. Vorrichtung zum automatischen Erfassen des Verschleißzustandes von ortsbeweglichen Rädern oder Rollen (1) in fördertechnischen Anlagen, insbesondere von Leit- oder Führungsrollen an Behältern von Gepäckförderanlagen,
**gekennzeichnet durch**
eine von dem Rad oder der Rolle (1) durchlaufene, im Förderweg der Anlage stationär angeordnete Messstation (2,3), in der Durchmesserabweichungen des Rades oder der Rolle (1) von einem vorgegebenen Solldurchmesser berührungslos erfassbar und signalisierbar sind.

2. Vorrichtung nach Anspruch 1,
**dadurch gekennzeichnet, dass**
die Erfassung der Durchmesserabweichungen des Rades oder der Rolle (1) in der Messstation (2,3) optisch erfolgt.

3. Vorrichtung nach Anspruch 1 und 2,
**dadurch gekennzeichnet, dass**
zur Erfassung der Durchmesserabweichungen in der Messstation (2,3) das Rad oder die Rolle (1) durch zwei voneinander beabstandete (a) parallele Lichtschranken (S) geführt wird, die tangential zum Rad- oder Rollenumfang gerichtet sind und deren Abstand dem kleinsten noch zulässigen Durchmesser des Rades oder der Rolle (1) entspricht.

4. Vorrichtung nach Anspruch 3,
**dadurch gekennzeichnet, dass**
zur Verbesserung der Messgenauigkeit in der Messstation (2,3) ein Schlitzblech (4) vorgesehen ist, dessen zwei im Abstand (a) angeordneten Schlitze (6) zur Bildung der Lichtschranken (S) jeweils einen definierten Lichtstrahl auf gegenüberliegende Sensoren (3) leiten.

5. Vorrichtung nach Anspruch 1 bis 4,
**dadurch gekennzeichnet, dass**
der Messstation (2,3) eine Auswerteeinheit (5) zugeordnet ist, in der das von den Sensoren (3) empfangene Messsignal auswertbar und in ein Anzeigesignal umwandelbar ist.

6. Vorrichtung nach einem der Ansprüche 1 bis 5,
**dadurch gekennzeichnet, dass**
zum Erkennen des Rades oder der Rolle (1) in der Messstation (2,3) auf der Höhe der Messstation (2,3) ein Initiator (7) installiert ist.

7. Vorrichtung nach einem der Ansprüche 1 bis 6,
**dadurch gekennzeichnet, dass**
zur Identifizierung des Rades oder der Rolle (1) stromaufwärts der Messstation (2,3) eine Lesestelle für eine mit dem Rad oder der Rolle (1) mitgeführte Information vorgesehen ist.

8. Messverfahren zum automatischen Erfassen des Verschleißzustandes von ortsbeweglichen Rädern oder Rollen in fördertechnischen Anlagen, insbesondere von Leit- oder Führungsrollen an Behältern von Gepäckförderanlagen,
**dadurch gekennzeichnet, dass**
eine beim Durchlaufen des Rades oder der Rolle durch zwei definiert voneinander beabstandete parallele Lichtschranken kurzzeitige gleichzeitige Unterbrechung beider Lichtschranken als Signal für ein unverschlissenes Rad oder eine unverschlissene Rolle gewertet wird und das Fehlen einer kurzzeitigen gleichzeitige Unterbrechung beider Lichtschranken beim Durchlaufen des Rades oder der Rolle durch die Lichtschranken als Signal für ein verschlissenes Rad oder eine verschlissene Rolle gewertet wird.
